# EUROPEAN PATENT APPLICATION

(11) **EP 2 551 451 A1**
(43) Date of publication of application: **30.01.2013**
(21) Application number: 12178397.1
(22) Date of filing: 28.07.2012
(51) Int. Cl.: F01D 3/04, F01D 17/02, F01D 21/00, G01H 1/00, F01D 21/04

(54) **A gas turbine electric power plant and a method for operating this plant**

(30) Priority: 28.07.2011 IT MI20111430
(71) Applicant: Ansaldo Energia S.p.A., Genova (IT)
(72) Inventor: Avanzino, Matteo, 16138 GENOVA (IT); Malavasi, Francesco, 16039 SESTRI LEVANTE (IT)
(74) Representative: Jorio, Paolo

(57) **Abstract**

A gas turbine electric power plant (1) equipped with: a rotor (8), which extends along a longitudinal axis (A); at least one compressor bearing assembly (25) equipped with moving means (30), configured to move the rotor (8) in the axial direction; a stator casing (9), which extends substantially around the rotor (8); first sensor means (60; 61), configured to measure at least a first parameter (DRT; DRC) indicative of the clearance between the rotor (8) and the casing (9); a regulating device (6) configured to regulate the moving means (30) of the compressor bearing assembly (25) on the basis of the first parameter (DRT; DRC) measured by the first sensor means (60; 61); second sensor means (65; 66; 67; 77; 80; 81; 83; 85; 86; 88; 89; 90) configured to measure at least a second parameter (DILRT; DILRC; DILA; CA; TP; TO; PO; VC; VBC; VRT; VRC; VA) of the plant (1); and a safety device (7) configured to selectively activate the regulating device (6) on the basis of the second parameter (DILRT; DILRC; DILA; CA; TP; TO; PO; VC; VBC; VRT; VRC; VA).

## Description

The present invention relates to a gas turbine electric power plant and method for operating said plant.

There are known gas turbine electric power plants comprising: a rotor, which extends along a longitudinal axis and is equipped with a plurality of rotor blades; a compressor bearing assembly comprising moving means configured to move the rotor; a stator casing, which extends substantially around the rotor; a sensor configured to measure a first parameter indicative of the clearance between the rotor and the stator casing; and a regulating device configured to regulate the moving means of the bearing on the basis of the parameter measured by the first sensor so as to reduce clearances between rotor and stator casing.

Minimizing the clearances between rotating parts (rotor blades) and stationary parts (stator casing) is of fundamental importance in electric power plants.

In fact, minimizing the clearances reduces losses due to flow leakage between the rotor blades and the stator casing, increasing the efficiency of the plant.

However, clearance adjustment in known types of plant is carried out regardless of the plant's real operating conditions. This entails the risk that adjustment of the clearances is also performed under unsuitable conditions, with consequent damage to the plant and worse performance.

One object of the present invention is that of providing a gas turbine electric power plant devoid of the drawbacks of the known art mentioned herein; in particular, an object of the invention is to provide a gas turbine electric power plant that is efficient and reliable at the same time.

In accordance with these objects, the present invention relates to a gas turbine electric power plant according to claim 1.

A further object of the invention is that of providing a method for operating a gas turbine electric power plant that is able to render the plant efficient and, at the same time, guarantee adequate reliability. In particular, an object of the present invention is to provide a method capable of increasing efficiency through minimizing the clearances, without, however, undermining the reliability and integrity of the plant.

In accordance with these objects, the present invention relates to a method for operating a gas turbine electric power plant according to claim 12.

Further characteristics and advantages of the present invention will become clear from the description that follows of a non-limitative embodiment, with reference to the figures in the attached drawings, where:
- Figure 1 is a schematic representation of a gas turbine electric power plant according to the present invention;
- Figure 2 is a schematic sectional view, with parts removed for clarity, of a first detail in Figure 1;
- Figure 3 is a schematic sectional view, with parts removed for clarity, of a second detail in Figure 1;
- Figure 4 is a schematic block representation of a third detail in Figure 1;
- Figure 5 is a schematic sectional view, with parts removed for clarity, of a fourth detail in Figure 1;
- Figure 6 is a schematic sectional view, with parts enlarged and parts removed for clarity, of a fifth detail in Figure 1;
- Figure 7 is a schematic sectional view, with parts removed for clarity, of a sixth detail in Figure 1;
- Figure 8 is a schematic sectional view, with parts removed for clarity, of a seventh detail in Figure 1;
- Figure 9 is a schematic sectional view, with parts enlarged and parts removed for clarity, of an eighth detail in Figure 1;
- Figure 10 is a schematic front view, with parts in section and parts removed for clarity, of a ninth detail in Figure 1;
- Figure 11 is a schematic front view, with parts in section and parts removed for clarity, of a tenth detail in Figure 1;
- Figure 12 is a schematic front view, with parts in section and parts removed for clarity, of an eleventh detail in Figure 1;
- Figure 13 is a schematic front view, with parts in section and parts removed for clarity, of a twelfth detail in Figure 1;
- Figure 14 is a schematic front view, with parts in section and parts removed for clarity, of a thirteenth detail in Figure 1;
- Figure 15 is a schematic side view, with parts removed for clarity, of a fourteenth detail in Figure 1.

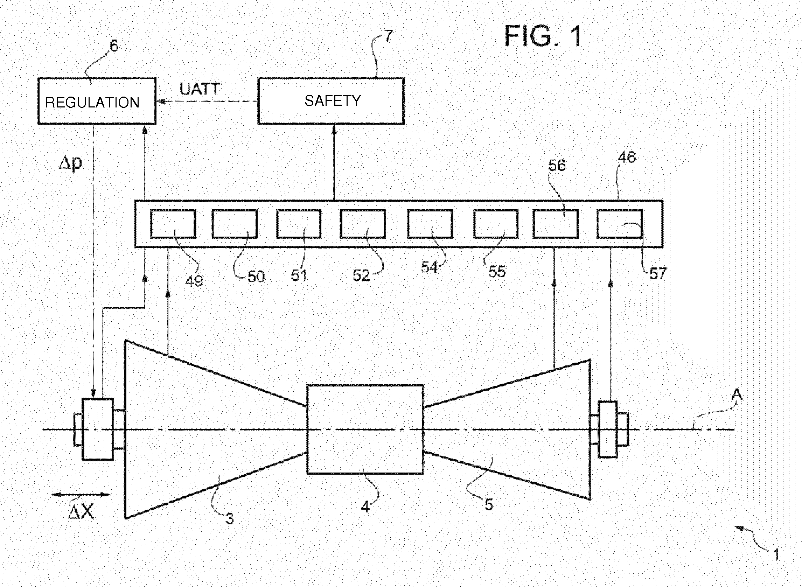

In Figure 1, reference numeral 1 indicates a gas turbine electric power plant (schematically shown in Figure 1).

The plant 1 comprises a compressor 3, a combustion chamber 4, a gas turbine 5 and a generator (for simplicity, not show in the attached figures), a regulating device 6 and a safety device 7.

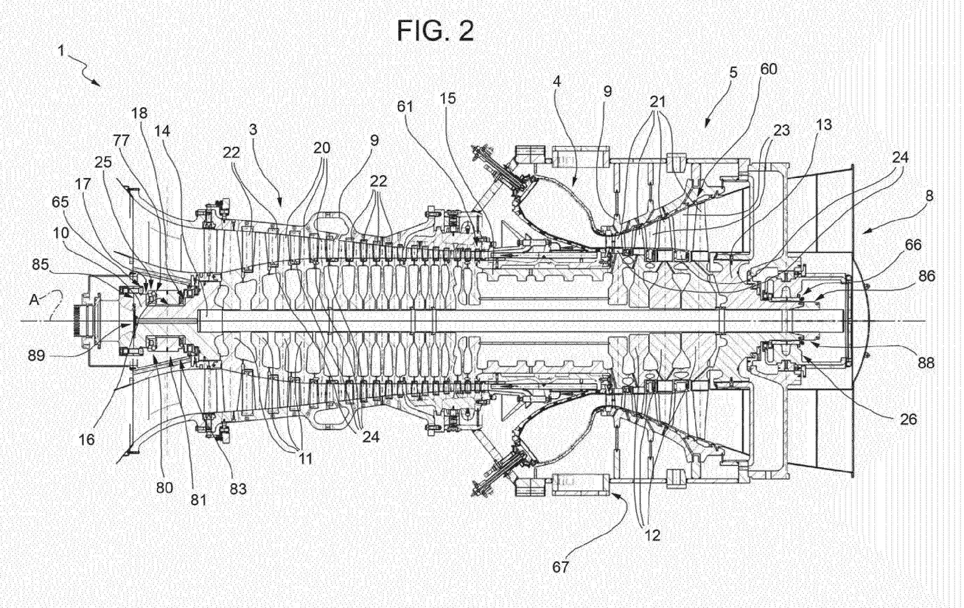

With reference to Figure 2, the compressor 3, turbine 5 and generator are mounted on the same shaft to form a rotor 8, which is housed in a stator casing 9 and extends along an axis A.

In greater detail, the rotor 8 is equipped with a front hollow shaft 10, a plurality of compressor rotor discs 11, a plurality of turbine rotor discs 12 and a rear hollow shaft 13.

The plurality of compressor rotor discs 11 and the plurality of turbine rotor discs 12 are arranged in succession between the front hollow shaft 10 and the rear hollow shaft 13 and clamped as a pack by a central tie rod 14. A central hollow shaft 15 separates the compressor rotor discs 11 from the turbine rotor discs 12 and it extends through the combustion chamber 4.

The front hollow shaft 10 is equipped with an annular seat 16 delimited by a main shoulder 17 and a secondary shoulder 18.

Each compressor rotor disc 10 is equipped with an annular assembly of compressor rotor blades 20, while each turbine rotor disc 11 is equipped with an annular assembly of turbine rotor blades 21.

Further assemblies of compressor stator blades 22 and turbine stator blades 23 are fixed to the casing 9 and to respective stator rings 24 and are alternated with the compressor rotor blades 20 and the turbine rotor blades 21, respectively.

The plant 1 is also equipped with a compressor bearing assembly 25 placed around the front hollow shaft 10 and a turbine bearing assembly 26 placed around the rear hollow shaft 13.

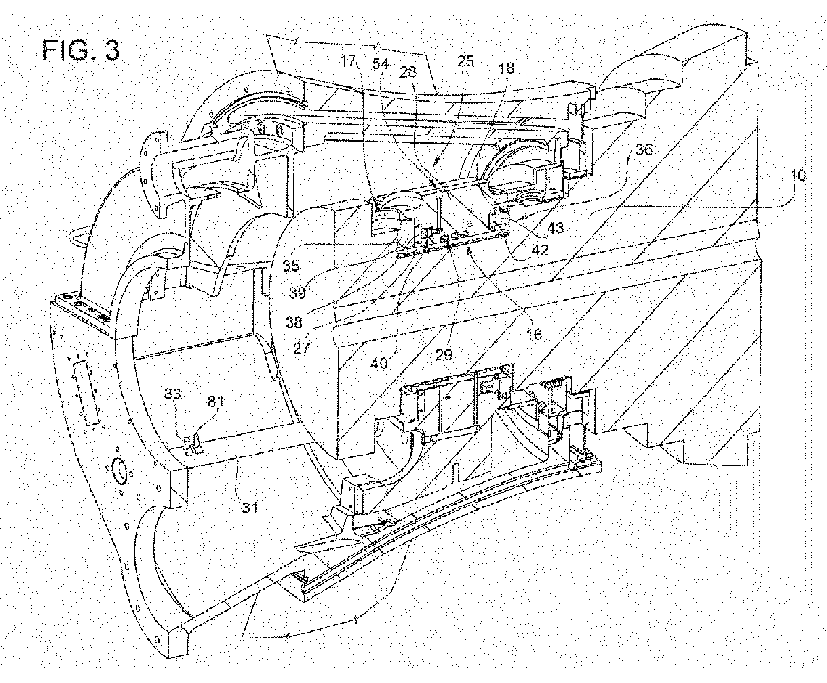

With reference to Figure 3, the compressor bearing assembly 25 substantially engages the annular seat 16 of the front hollow shaft 10 and comprises a plain bearing 27 placed around the front hollow shaft 10, a support body 28 placed around the plain bearing 27, a lubrication circuit 29 and moving means 30 configured to move the rotor 8 in the axial direction.

The lubrication circuit 29 supplies lubricating oil to the plain bearing 27 and comprises a header (not visible in the attached figures), which is in communication with the plain bearing 27 through a pipe 31.

The moving means 30 comprise a main thrust bearing 35, a secondary thrust bearing 36 and a hydraulic circuit 37.

The main thrust bearing 35 comprises a main thrust ring 38, a plurality of main slippers 39 and a plurality of main levers (not visible in the attached figures) arranged between the main thrust ring 38 and the main slippers 39 to move the main slippers 39.

Each main slipper 39 has a surface facing the main shoulder 17. An oil film is preferably present between the main shoulder 17 and the main slippers 39 to guarantee safe sliding.

The main thrust ring 38 is moved by the hydraulic circuit 37.

In particular, a fluid under pressure flows in the hydraulic circuit 37, usually oil, which displaces a plurality of main pistons 40 in the axial direction to move the main thrust ring 38 in the axial direction.

The movement imparted to the main thrust ring 38 by the main pistons 40 is transmitted to the main slippers 39 through the main levers.

In this way, movement is imparted to the rotor 8 in the axial direction.

The pressure p of the oil in the hydraulic circuit 37 is controlled by the regulating device 6, as will be seen in detail further on, so as to impart a controlled movement ΔX to the rotor 8 in the axial direction.

The secondary thrust bearing 36 has a similar shape to the main thrust bearing 35 and comprises a secondary thrust ring 42, a plurality of secondary slippers 43 and a plurality of secondary levers (not visible in the attached figures) arranged between the secondary thrust ring 42 and the secondary slippers 43. Each secondary slipper 43 has a surface facing the secondary shoulder 18. An oil film is preferably present between the secondary shoulder 18 and the secondary slippers 43 to guarantee safe sliding.

With reference to Figure 1, the plant 1 is also equipped with a sensor module 46 comprising an array of clearance sensors 49 configured to measure at least one parameter indicative of the clearance between the rotor 8 and the casing 9, an array of thermal expansion sensors 50 configured to measure at least one parameter indicative of the thermal expansion of the rotor 8, an array of thrust sensors 51 configured to measure at least one parameter indicative of the force exerted by the rotor 8 on the compressor bearing assembly 20 in the axial direction, an array of temperature sensors 52 configured to measure at least one parameter indicative of the temperature of the lubricating oil in the lubrication circuit 29 of the compressor bearing assembly 25, an array of pressure sensors 54 configured to measure at least one parameter indicative of the pressure of the lubricating oil in the lubrication circuit 29, a first array of vibration sensors 55 configured to measure at least one parameter indicative of the vibration of the compressor bearing assembly 25, a second array of vibration sensors 56 configured to measure at least one parameter indicative of the vibration of the rotor 8, and a third array of vibration sensors 57 configured to measure at least one parameter indicative of the vibration of the casing 9.

The array of clearance sensors 49 is configured to measure the parameters indicative of the clearance between the rotor 8 and the casing 9 and send them to the safety device 7 and to the regulating device 6, which, on the basis of the received values, calculates the pressure difference Δp to set in the hydraulic circuit 37 to obtain a desired axial movement ΔX of the rotor 8, as shall be seen in detail further on.

The array of thermal expansion sensors 50, the array of thrust sensors 51, the array of temperature sensors 52, the array of pressure sensors 54, the first array of vibration sensors 55, the second array of vibration sensors 56 and the third array of vibration sensors 57 measure the respective parameters and send them to the safety device 7, which is configured, as shall be seen in detail further on, to selectively activate the regulating device 6 on the basis of the values of the plurality of input parameters.

In detail, the array of clearance sensors 49 comprises a first radial clearance sensor 60 housed in the casing 9 and configured to measure the radial clearance DRT between the turbine rotor blades 21 and the casing 9, and a second radial clearance sensor 61 housed in the casing 9 and configured to measure the radial clearance DRC between the compressor rotor blades 20 and the casing 9.

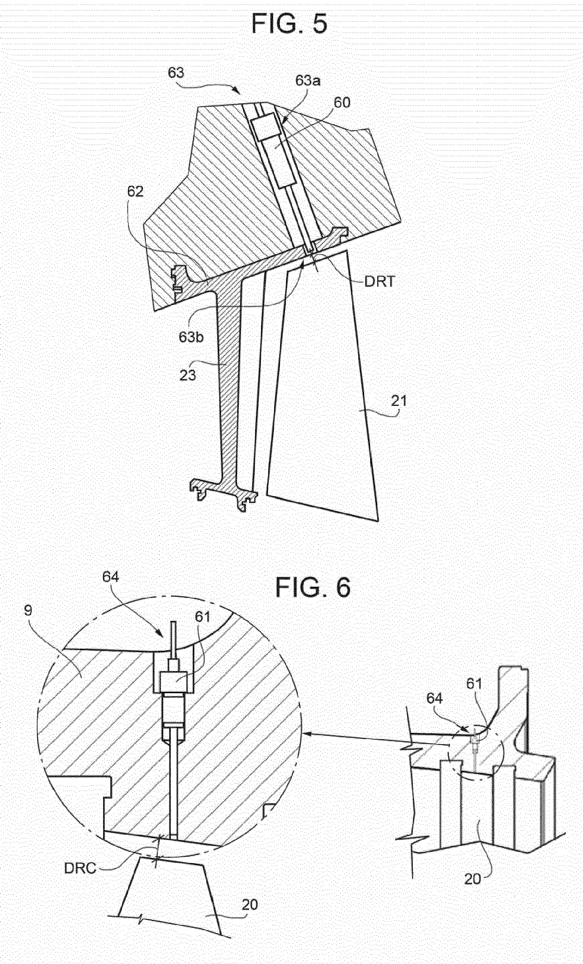

With reference to Figure 5, the first radial clearance sensor 60 is a capacitive sensor housed in a respective seat 63 of the stator casing 9 on the turbine 5 side; preferably, the seat 63 is positioned level with the last stage of the turbine 5 (the stage furthest away from the combustion chamber 4), to avoid damage to the first radial clearance sensor 60 due to high temperatures. In detail, the seat 63 comprises a first portion 63a made in the casing 9 and a second portion 63b made in the anchor portion 65 of the turbine stator blade 23 adjacent to the turbine rotor blade 21 of the last stage of the turbine 5.

It is understood that the seat 63 can be positioned at stages of the turbine 5 closer to the combustion chamber 4 if the first radial clearance sensor 60 is opportunely configured to support higher temperatures.

With reference to Figure 6, the second radial clearance sensor 61 is a capacitive sensor housed in a respective seat 64 of the stator casing 9 on the compressor 3 side; preferably, the seat 64 is positioned at the last stage of the compressor 3 (the stage closest to the combustion chamber 4).

A first variant, not shown, envisages that the array of clearance sensors 49 comprises further capacitive radial clearance sensors housed in respective seats of the stator casing 9 on the compressor 3 side, preferably distributed uniformly along the compressor 3 between the first and last stages.

A second variant, not shown, of the present invention envisages that the array of clearance sensors 49 also comprises a first axial clearance sensor and a second axial clearance sensor. The first axial clearance sensor is housed in one of the stator rings 24 on the turbine 5 side to measure the distance, in the axial direction, between the stator ring 24 and the respective turbine rotor disc 12, while the second axial clearance sensor is housed in one of the stator rings 24 on the compressor 3 side to measure the distance, in the axial direction, between the stator ring 24 and the respective compressor rotor disc 11.

With reference to Figure 2, the array of thermal expansion sensors 50 comprises a first expansion sensor 65 housed in the compressor bearing assembly 25 to measure the relative expansion DILRC between the rotor 8 and a fixed stator portion on the compressor 3 side (cold side), a second expansion sensor 66 housed in the turbine bearing assembly 26 to measure the relative expansion DILRT between the rotor 8 and the fixed stator portion on the turbine 5 side (hot side), and an absolute expansion sensor 67 housed in the casing 9 to measure the expansion DILA between the casing 9 and the ground on which the plant 1 is positioned.

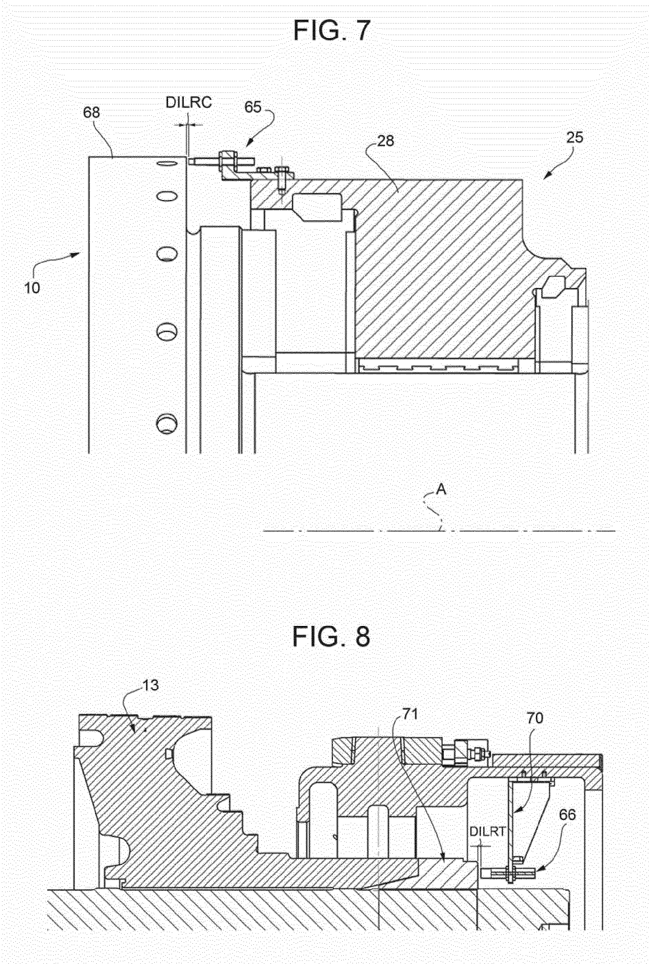

With reference to Figure 7, the first expansion sensor 65 is a proximity sensor positioned on a perimeter portion of the support body 28 of the compressor bearing assembly 25 (fixed stator portion) to measure the distance DILRC, in the axial direction, between the first expansion sensor 65 and a flange 68 of the front hollow shaft 10 (integral with the rotor 8).

With reference to Figure 8, the second expansion sensor 66 is a proximity sensor positioned on a portion 70 of the turbine bearing assembly 26 (fixed stator portion) to measure the distance DILRT between the second expansion sensor 66 and a portion 71 of the rear hollow shaft 13 (integral with the rotor 8).

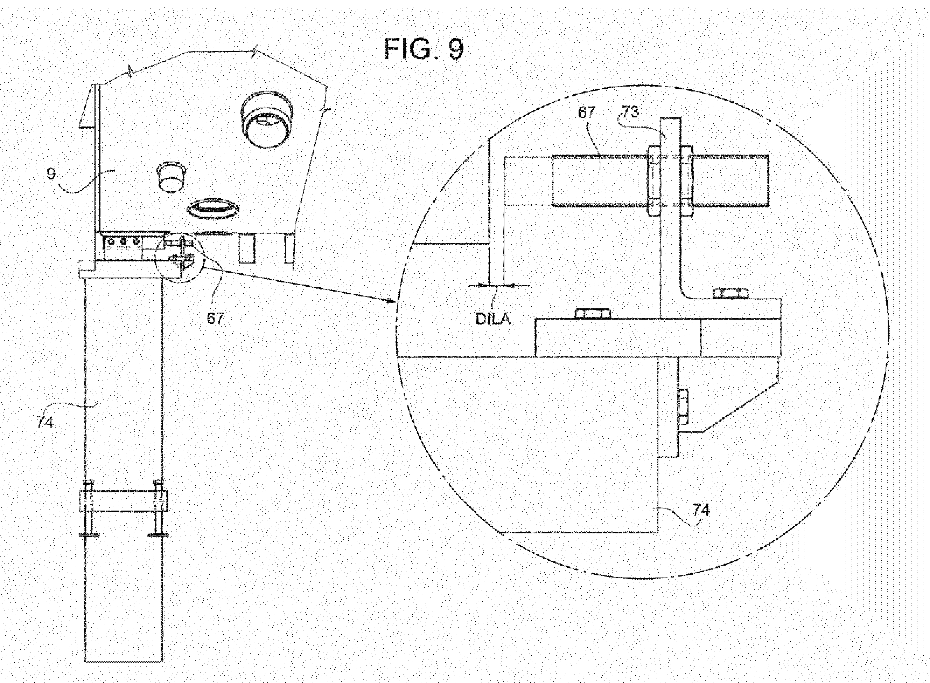

With reference to Figure 9, the absolute expansion sensor 67 is a proximity sensor positioned on a perimeter portion of a flange 73 of a pedestal 74 of the casing 9 (integral with the ground) to measure the distance DILA between the absolute expansion sensor 67 and the portion 75 of casing 9 that faces the sensor.

With reference to Figure 2, the array of thrust sensors 51 comprises an axial thrust sensor 77 configured to measure a parameter indicative of the force exerted by the rotor 8 on the compressor bearing assembly 25 in the axial direction.

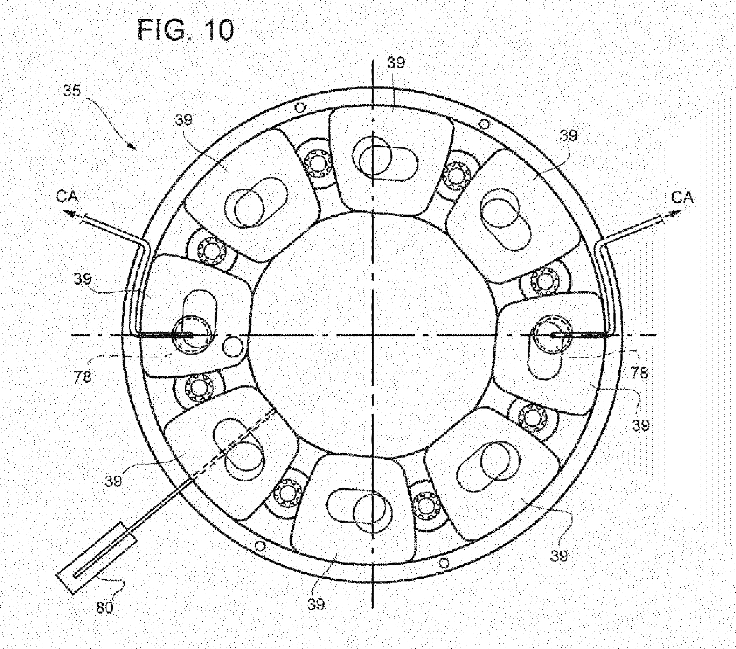

With reference to Figure 10, the axial thrust sensor 77 is configured to measure the axial load CA exerted on the main slippers 39 of the main thrust bearing 35 of the compressor bearing assembly 25 and comprises at least one load cell 78 (represented in Figure 10 with a dotted line) placed in contact with a respective main slipper 39 to detect the axial load CA exerted on the respective main slipper 39.

Preferably, the axial thrust sensor 77 comprises two load cells 78 in contact with respective main slippers 39 arranged in diametrically opposed positions.

A variant, not shown, of the present invention envisages that the array of thrust sensors 51 also comprises an axial thrust sensor configured to measure the axial load exerted on the secondary slippers 43 of the secondary thrust bearing 36 of the compressor bearing assembly 25.

With reference to Figure 1, the array of temperature sensors 52 comprises a temperature sensor 80 and a temperature sensor 81, which are configured to measure respective parameters indicative of the temperature of the compressor bearing assembly 25.

With reference to Figure 10, temperature sensor 80 is a thermocouple placed in contact with at least one main slipper 39 to measure the temperature TP of the metal with which the main slippers 39 are made. With reference to Figure 3, temperature sensor 81 is a thermocouple configured to measure the temperature of the lubricating oil TO that flows in pipe 31 of the lubrication circuit 28 of the compressor bearing assembly 25. This parameter is indicative of the level of cooling (and the consequent viscosity) of the lubricating oil.

A variant, not shown, of the present invention envisages that the array of temperature sensors 52 comprises a temperature sensor placed in contact with at least one secondary slipper 43 to measure the temperature of the metal with which the secondary slippers 43 are made.

With reference to Figure 1, the array of pressure sensors 54 comprises a pressure sensor 83 (better seen in Figure 3) configured to measure the pressure of the lubricating oil PO that flows in pipe 31 of the lubrication circuit 28 of the compressor bearing assembly 25.

With reference to Figure 1, the first array of vibration sensors 55 comprises a first vibration sensor 85 configured to measure the vibration VC of the compressor bearing assembly 25 and a second vibration sensor 86 configured to measure the vibration VBC of the turbine bearing assembly 26.

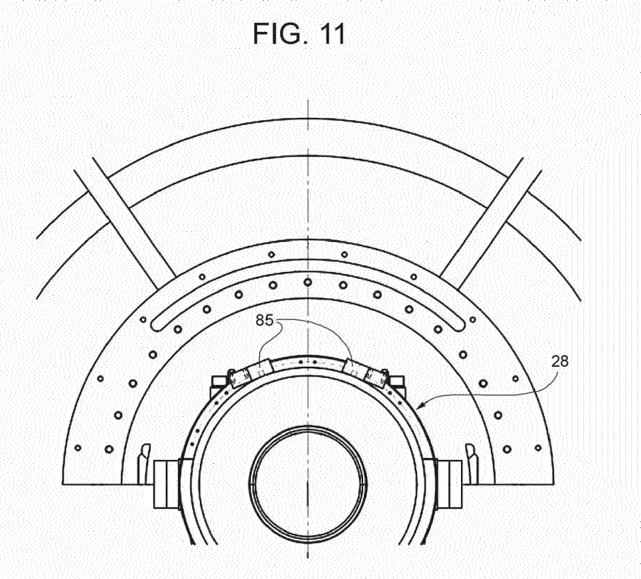

With reference to Figure 11, the first vibration sensor 85 comprises two accelerometers fixed to the support body 28 of the compressor bearing assembly 25.

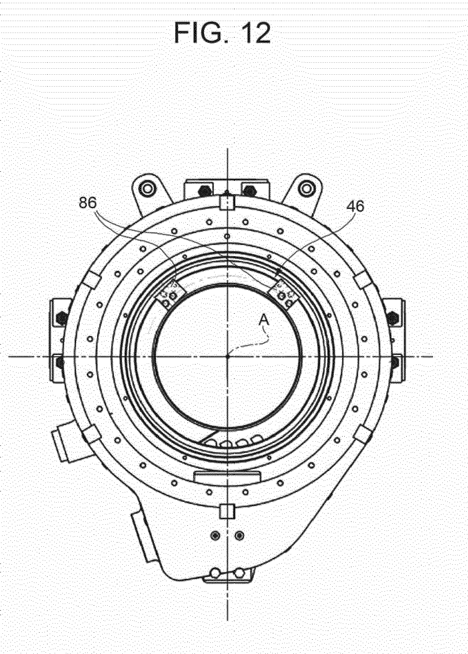

With reference to Figure 12, the second vibration sensor 86 comprises two accelerometers fixed to a portion of the turbine bearing assembly 26.

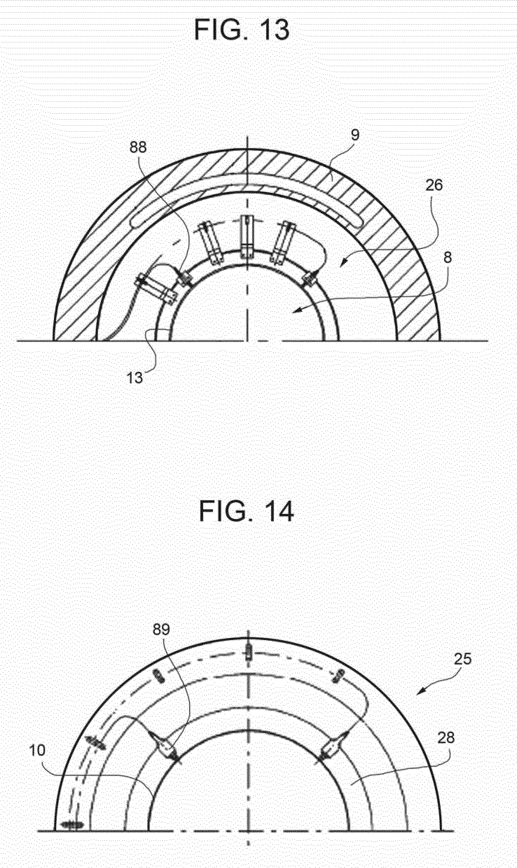

With reference to Figure 2, the second array of vibration sensors 56 comprises a vibration sensor 88 (better seen in Figure 13), configured to measure the relative vibration VRC between the rotor 8 and the casing 9 on the turbine 5 side (hot side), and a vibration sensor 89 (better seen in Figure 14), configured to measure the relative vibration VRC between the rotor 8 and the casing 9 on the compressor 3 side (cold side).

With reference to Figure 13, vibration sensor 88 comprises a proximity sensor coupled to the turbine bearing assembly 26 to measure the distance between vibration sensor 88 and the portion of the rear hollow shaft 13 (integral with the rotor 8) that faces vibration sensor 88.

With reference to Figure 14, vibration sensor 89 comprises a proximity sensor coupled to the support body 28 of the compressor bearing assembly 25 to measure the distance between vibration sensor 89 and the portion of the front hollow shaft 10 (integral with the rotor 8) that faces vibration sensor 89.

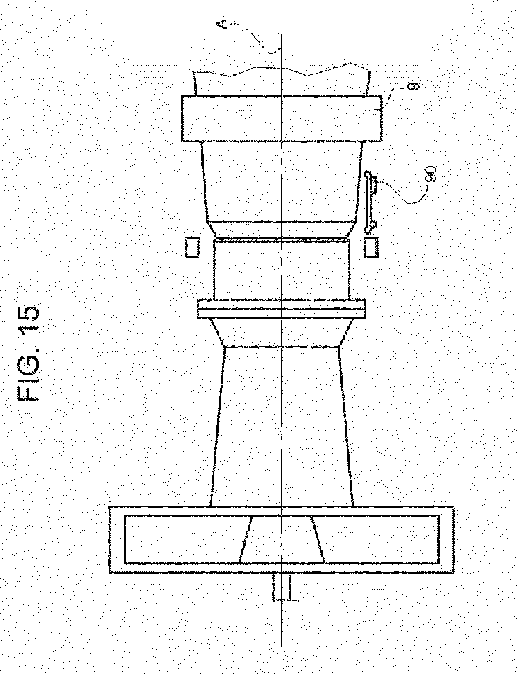

With reference to Figure 15, the third array of vibration sensors 57 comprises an absolute vibration sensor 90 configured to measure the vibration VA of the casing 9. In particular, the absolute vibration sensor 90 is an accelerometer positioned on the outside of the casing 9 on the turbine 5 side.

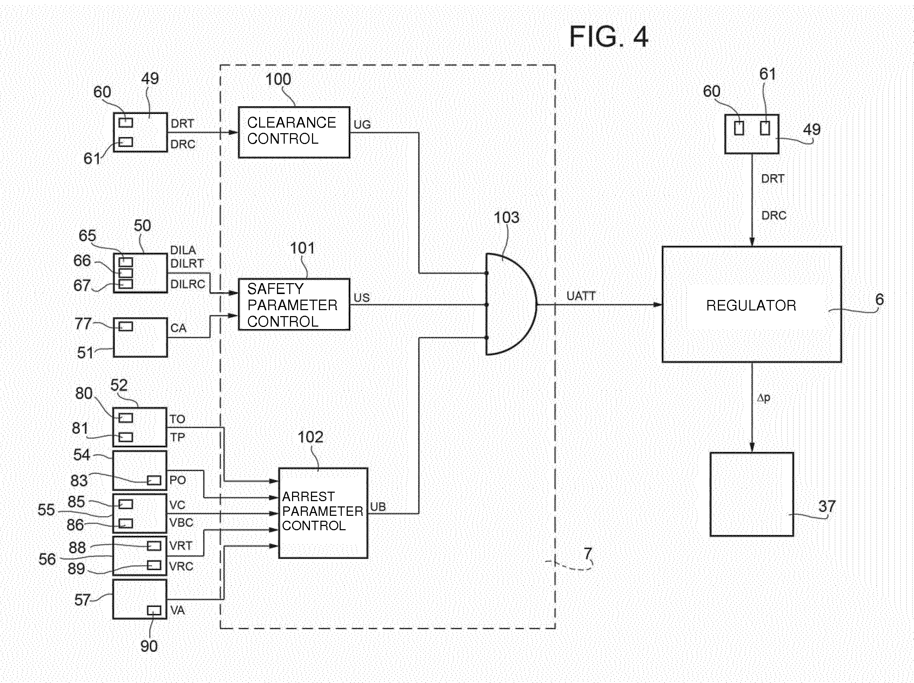

With reference to Figure 4, the clearance parameters DRT and DRC measured by the first radial clearance sensor 60 and the second radial clearance sensor 61 are sent to the regulating device 6.

The regulating device 6 is configured to calculate the pressure variation Δp to set in the hydraulic circuit 37 of the compressor bearing assembly 25 to impart an axial movement ΔX to the rotor 8, which is calculated so as to minimize the clearances and optimize the efficiency of the plant 1.

Preferably, the regulating device 6 is configured to calculate the movement ΔX and the pressure variation Δp on the basis of experimentally-obtained data tables.

The regulating device 6 selectively enters operation on the basis of the activation signal UATT generated by the safety device 7.

When the activation signal UATT is equal to 1, the regulating device 6 is activated, calculation of the pressure variation Δp is carried out and, if necessary, the rotor 8 is moved axially.

When the activation signal UATT is equal to zero, the regulating device 6 is not activated.

In detail, the safety device 7 comprises a clearance control block 100, a safety parameter control block 101, an arrest parameter control block 102 and a selection block 103.

The clearance control block 100 receives parameters DRT and DRC from the array of clearance sensors 49 and calculates a clearance control signal UG, which is equal to 1 if the input parameters (DRT and DRC) fall within the respective predefined acceptability ranges and equal to zero if at least one on the parameters (DRT or DRC) coming from the array of clearance sensors 49 is outside the respective acceptability range. The acceptability ranges are determined experimentally beforehand.

The safety parameter control block 101 receives parameters DILRT, DILRC, DILA and CA from the array of thermal expansion sensors 50 and the array of thrust sensors 51 and calculates a safety control signal US, which is equal to 1 if the input parameters (DILRT, DILRC, DILA and CA) fall within the respective predefined acceptability ranges and equal to zero if at least one on the parameters (DILRT, DILRC, DILA or CA) coming from the array of thermal expansion sensors 50 and the array of thrust sensors 51 is outside the respective acceptability range.

The arrest parameter control block 102 receives parameters TO, TP, PO, VC, VBC, VRT, VRC and VA from the array of temperature sensors 52, the first array of vibration sensors 54, the second array of vibration sensors 55 and the third array of vibration sensors 56, and calculates a block control signal UB, which is equal to 1 if the input parameters (TO, TP, PO, VC, VBC, VRT, VRC and VA) fall within the respective predefined acceptability ranges and equal to zero if at least one on the parameters (TO, TP, PO, VC, VBC, VRT, VRC or VA) coming from the array of temperature sensors 52, the first array of vibration sensors 54, the second array of vibration sensors 55 and the third array of vibration sensors 56 is outside the respective acceptability range.

The selection block 103 is configured to behave like a logical AND gate and therefore supplies an output signal UATT equal to 1 if all the input signals (UG, US and UB) are equal to 1 and supplies a signal UATT equal to zero if at least one of the input signals is different from 1.

Essentially, the safety device 7 is configured to activate the regulating device 6 (responsible for controlling movement of the rotor 8) only when allowed by the conditions of the plant 1. In this way, activation of clearance minimization is avoided in conditions that are critical for the plant 1.

The presence of the safety device 7 advantageously enables risk-free activation of clearance adjustment (performed by the regulating device 6).

Moreover, thanks to the presence of the safety device 7 configured in this manner, it is possible to provide for activation of clearance adjustment even in conditions of the plant 1 that till now were excluded precisely to avoid subjecting the plant 1 to high risks of damage.

At present, in fact, clearance adjustment is mainly carried out when the plant operates at base load.

Thanks to the presence of the safety device 7, it is possible to activate clearance adjustment in total safety at base and high loads as well, significantly increasing the efficiency of the plant 1.

It is understood that modifications and variants can be made to the gas turbine electric power plant and to the method for operating the plant according to the present invention without leaving the scope of the appended claims.

## Claims

1. A gas turbine electric power plant (1) comprising:
- a rotor (8), which extends along a longitudinal axis (A);
- at least one compressor bearing assembly (25) equipped with moving means (30), configured to move the rotor (8) in the axial direction;
- a stator casing (9), which extends substantially around the rotor (8);
- first sensor means (60; 61), configured to measure at least a first parameter (DRT; DRC) indicative of the clearance between the rotor (8) and the casing (9);
- a regulating device (6) configured to regulate the moving means (30) of the compressor bearing assembly (25) on the basis of the first parameter (DRT; DRC) measured by the first sensor means (60; 61);
- second sensor means (65; 66; 67; 77; 80; 81; 83; 85; 86; 88; 89; 90) configured to measure at least a second parameter (DILRT; DILRC; DILA; CA; TP; TO; PO; VC; VBC; VRT; VRC; VA) of the plant (1); and
- a safety device (7) configured to selectively activate the regulating device (6) on the basis of the second parameter (DILRT; DILRC; DILA; CA; TP; TO; PO; VC; VBC; VRT; VRC; VA).

2. The plant according to claim 1, wherein the safety device (7) is configured to activate the regulating device (6) when the second parameter (DILRT; DILRC; DILA; CA; TP; TO; PO; VC; VBC; VRT; VRC; VA) falls within a respective acceptability range and to deactivate the regulating device 6 when the second parameter (DILRT; DILRC; DILA; CA; TP; TO; PO; VC; VBC; VRT; VRC; VA) does not fall within the respective acceptability range.

3. The plant according to claim 1 or 2, wherein the second sensor means comprise at least an expansion sensor (65; 66; 67) configured to measure an expansion parameter (DILRT; DILRC; DILA) indicative of the thermal expansion of the rotor (8).

4. The plant according to any of the preceding claims, wherein the second sensor means comprise at least a thrust sensor (77) configured to measure a load parameter (CA) indicative of the force exerted by the rotor (8) on the compressor bearing assembly (25) in the axial direction.

5. The plant according to any of the preceding claims, wherein the second sensor means comprise at least a first temperature sensor (80) configured to measure a first temperature parameter (TP) indicative of the temperature of the compressor bearing assembly (25).

6. The plant according to any of the preceding claims, wherein the compressor bearing assembly (25) comprises at least a lubrication circuit (29) wherein lubricating oil flows and the second sensor means comprise at least a second temperature sensor (81) configured to measure a second temperature parameter (TO) indicative of the temperature of the lubricating oil in the lubrication circuit (29).

7. The plant according to any of the preceding claims, wherein the compressor bearing assembly (25) comprises at least a lubrication circuit (29) wherein lubricating oil flows and the second sensor means comprise at least a pressure sensor (83) configured to measure a pressure parameter (PO) indicative of the pressure of the lubricating oil in the lubrication circuit (29).

8. A plant according to any of the preceding claims, wherein the second sensor means comprise at least a first vibration sensor (85) configured to measure a first vibration parameter (VC) indicative of the vibration of the compressor bearing assembly (25).

9. The plant according to any of the preceding claims, comprising a turbine bearing assembly (26) and the second sensor means comprising at least a second vibration sensor (86) configured to measure a second vibration parameter (VBC) indicative of the vibration of the turbine bearing assembly (26).

10. The plant according to any of the preceding claims, wherein the second sensor means comprise at least a third vibration sensor (88; 89) configured to measure a third vibration parameter (VRT; VRC) indicative of the vibration of the rotor (8).

11. The plant according to any of the preceding claims, wherein the second sensor means comprise at least a fourth vibration sensor (90) configured to measure a fourth vibration parameter (VA) indicative of the vibration of the casing (9).

12. A method for operating a gas turbine electric power plant (1), the plant (1) comprising a rotor (8) that extends along a longitudinal axis (A), at least one compressor bearing assembly (25) equipped with moving means (30) configured to move the rotor (8) in the axial direction and a stator casing (9) that extends substantially around the rotor (8);
the method comprising the steps of:
- measuring at least a first parameter (DRT; DRC) indicative of the clearance between the rotor (8) and the casing (9) by means of the first sensor means (60; 61);
- regulating the moving means (30) of the compressor bearing assembly (25) on the basis of the measured first parameter (DRT; DRC) by means of a regulating device (6);
- measuring at least a second parameter (DILRT; DILRC; DILA; CA; TP; TO; PO; VC; VBC; VRT; VRC; VA) of the plant (1) by means of the second sensor means (65; 66; 67; 77; 80; 81; 83; 85; 86; 88; 89; 90);
- selectively activating the regulating device (6) on the basis of the second parameter (DILRT; DILRC; DILA; CA; TP; TO; PO; VC; VBC; VRT; VRC; VA).

13. The method according to claim 12, wherein the step of selectively activating the regulating device (6) on the basis of the second parameter (DILRT; DILRC; DILA; CA; TP; TO; PO; VC; VBC; VRT; VRC; VA) comprises the steps of: activating the regulating device (6) when the second parameter (DILRT; DILRC; DILA; CA; TP; TO; PO; VC; VBC; VRT; VRC; VA) falls within a respective acceptability range; and deactivating the regulating device (6) when the second parameter (DILRT; DILRC; DILA; CA; TP; TO; PO; VC; VBC; VRT; VRC; VA) does not fall within the respective acceptability range.
